# EUROPEAN PATENT APPLICATION

(11) **EP 4 458 549 A1**
(43) Date of publication of application: **06.11.2024**
(21) Application number: 22916388.6
(22) Date of filing: 07.11.2022
(51) Int. Cl.: B29C 59/02, H01M 50/102, B29C 59/00, H01M 50/124, H01M 50/148, H01M 50/105, H01M 50/107, B29L 31/34

(54) **APPARATUS AND METHOD FOR FORMING PATTERN ON EXTERIOR MATERIAL OF BATTERY**

(30) Priority: 28.12.2021 KR 20210189693; 15.09.2022 KR 20220115977
(71) Applicant: Libest Inc., Daejeon 34002 (KR)
(72) Inventor: KIM, Joo Seong, Sejong 30147 (KR); LIM, Seung Gyu, Daejeon 34002 (KR); LEE, Gil Ju, Daejeon 34002 (KR)
(74) Representative: Brann AB
(86) International application number: PCT/KR2022/017329
(87) International publication number: WO 2023/128234

(57) **Abstract**

An apparatus for forming a pattern on an exterior material of a battery includes a plate that has a plurality of holes and includes a receiving region formation part configured to form a receiving region in an exterior material in a longitudinal direction of the battery and a non-receiving region formation part configured to form a non-receiving region enclosing the receiving region, and a punch assembly that has a plurality of punches corresponding to the plurality of holes and inserted into the plurality of holes to penetrate through the plate.

## Description

### TECHNICAL FIELD

The present invention relates to an apparatus and method for forming a pattern on an exterior material of a battery.

### BACKGROUND

An electrochemical cell refers to an assembly that is composed of at least two electrodes and an electrolyte to provide electrical energy, and in particular, lithium-ion batteries configured as chargeable and dischargeable secondary cells are being widely used for various advanced electronic devices including smart phones.

Recently, various attempts have been made to deviate from conventional shapes in the design of mobile devices, including smartphones, and various wearable devices. Also, attention is increasing on flexible devices which can be bent while maintaining their functions. Accordingly, it is important to secure the function and safety of a flexible electrochemical cell which can be built in such a flexible device and can be used as a power source.

In general, a flexible battery employs a metal laminate composite film produced by laminating a functional polymer and metal foil to completely isolate an electrode assembly from an external environment. When such a composite film is used as an exterior material for an electrochemical cell, the composite film may be damaged due to repetitive external force caused by repeated bending and straightening of the flexible battery. Therefore, the composite film cannot serve to isolate the electrode assembly from the external environment, which may cause performance and safety problems of the electrochemical cell.

Recently, in order to solve this problem, a technique of imparting a shape to a composite film to impart flexibility to an electrochemical cell has been used. However, as for the technique of imparting a shape to the composite film, the processing method and procedure are not clear and the shape processing is not performed in a thickness direction of the electrochemical cell, and, thus, the durability of the composite film is degraded.
(Patent Document 1) Korean Patent No. 10-1870455 (registered on June 18, 2018)
(Patent Document 2) Korean Patent Laid-open Publication No. 2022-0015290 (published on February 8, 2022)

### DISCLOSURE OF THE INVENTION

### PROBLEMS TO BE SOLVED BY THE INVENTION

It is to provide an apparatus and method for forming a pattern, including a plurality of holes and includes a receiving region formation part configured to form a receiving region in an exterior material in a longitudinal direction of a battery and a non-receiving region formation part configured to form a non-receiving region enclosing the receiving region.

Also, it is conceived to provide an apparatus and method for forming a pattern, including a punch assembly that has a plurality of punches corresponding to the plurality of holes inserted into the plurality of holes such that the plurality of punches penetrate through the plate.

The problems to be solved by the embodiments are not limited to the above-described problems, and there may be other problems to be solved.

### MEANS FOR SOLVING THE PROBLEMS

As a means to achieve the above-described technical problem, an embodiment of the present invention may provide an apparatus for forming a pattern on an exterior material of a battery, the apparatus for forming the pattern includes a plate that has a plurality of holes and includes a receiving region formation part configured to form a receiving region in an exterior material in a longitudinal direction of the battery and a non-receiving region formation part configured to form a non-receiving region enclosing the receiving region, and a punch assembly that has a plurality of punches corresponding to the plurality of holes inserted into the plurality of holes such that the plurality of punches penetrate through the plate.

Another embodiment of the present invention may provide a method for forming a pattern on an exterior material by an apparatus for forming a pattern including a plate that has a plurality of holes and includes a receiving region formation part configured to form a receiving region in the exterior material in a longitudinal direction of a battery and a non-receiving region formation part configured to form a non-receiving region enclosing the receiving region and a punch assembly that has a plurality of punches corresponding to the plurality of holes inserted into the plurality of holes such that the plurality of punches penetrate through the plate, the method for forming the pattern includes placing the exterior material between an upper plate and a lower plate of the plate, forming the first pattern on the exterior material by pressurizing the exterior material with the upper plate and the lower plate, and forming the second pattern on the exterior material on which the first pattern has been formed by inserting the plurality of punches into the holes located in each of the lower plate and the upper plate.

The above-described means for solving the problem are merely illustrative and should not be construed as intended to limit the present invention. In addition to the exemplary embodiments described above, there may be additional embodiments described in the drawings and detailed description of the invention.

### EFFECTS OF THE INVENTION

According to any one of the above-described means for solving the problems of the present invention, it is possible to provide an apparatus and method for forming a pattern by using a plate that has a plurality of holes and includes a receiving region formation part configured to form a receiving region in an exterior material in a longitudinal direction of a battery and a non-receiving region formation part configured to form a non-receiving region enclosing the receiving region and a punch assembly that has a plurality of punches corresponding to the plurality of holes inserted into the plurality of holes such that the plurality of punches penetrate through the plate to process the exterior material so that a pattern can be formed on the exterior material to impart flexibility to the exterior material.

Also, it is possible to provide an apparatus and method for forming a pattern which can form a forming shape corresponding to a first pattern and a patterning shape corresponding to a second pattern at once on the exterior material by placing the exterior material between an upper plate and a lower plate of the plate, forming the first pattern on the exterior material by pressurizing the exterior material with the upper plate and the lower plate, and forming the second pattern on the exterior material on which the first pattern has been formed by inserting the plurality of punches into the holes located in each of the lower plate and the upper plate.

Further, it is possible to provide an apparatus and method for forming a pattern which can impart flexibility to an electrochemical cell and improve the durability of the exterior material by suppressing damage to a composite film used for the exterior material and a degradation in performance of the electrochemical cell.

### BRIEF DESCRIPTION OF THE DRAWINGS

**FIG. 1A** to **FIG. 1E** are diagrams illustrating a lower plate of a pattern forming apparatus according to an embodiment of the present invention.
**FIG. 2A** to **FIG. 2E** are diagrams illustrating an upper plate of the pattern forming apparatus according to an embodiment of the present invention.
**FIG. 3A** to **FIG. 3F** are diagrams illustrating a first type punch included in a punch assembly corresponding in position to the lower plate according to an embodiment of the present invention.
**FIG. 4A** to **FIG. 4F** are diagrams illustrating a second type punch included in the punch assembly corresponding in position to the upper plate according to an embodiment of the present invention.
**FIG. 5** is a diagram illustrating the pattern forming apparatus according to an embodiment of the present invention.
**FIG. 6A** to **FIG. 6D** are diagrams provided to explain forming a pattern on an exterior material by the pattern forming apparatus according to an embodiment of the present invention.
**FIG. 7** is a flowchart showing a method of forming a pattern on an exterior material by a pattern forming apparatus according to an embodiment of the present invention.
**FIG. 8A** to **FIG. 8C** are diagrams illustrating an exterior material on which a first pattern and a second pattern are formed, and a battery manufactured by using the exterior material according to an embodiment of the present invention.
**FIG. 9** illustrates actual views of an exterior material on which a first pattern and a second pattern are formed, and a battery manufactured by using the exterior material according to an embodiment of the present invention.

### BEST MODE FOR CARRYING OUT THE INVENTION

Hereinafter, embodiments of the present invention will be described in detail with reference to the accompanying drawings to be readily implemented by a person with ordinary skill in the art to which the present invention belongs. However, it is to be noted that the present invention is not limited to the example embodiments but can be embodied in various other ways. In the drawings, parts irrelevant to the description are omitted in order to clearly explain the present invention, and like reference numerals denote like parts through the whole document.

Through the whole document, when a part is said to be "connected" to another part, this includes not only cases where it is "directly connected," but also cases where it is "electrically connected" with another element in between. Additionally, when a part "comprises or includes" a certain component, this means that it may further include other components rather than excluding other components unless specifically stated to the contrary. It should be understood that it does not exclude in advance the presence or addition of numbers, steps, operations, components, parts, or combinations thereof.

Through the whole document, a term 'part' includes a unit realized by hardware, a unit realized by software, and a unit realized using both. Additionally, one unit may be realized using two or more pieces of hardware, and two or more units may be realized using one piece of hardware.

Through the whole document, some of the operations or functions described as being performed by a terminal or device may instead be performed on a server connected to the terminal or device. Likewise, some of the operations or functions described as being performed by the server may also be performed on a terminal or device connected to the server.

As for a conventional pattern forming apparatus, a plate does not have a plurality of holes. Therefore, a forming shape and a patterning shape cannot be formed at once on an exterior material. However, according to the present invention, a forming shape and a patterning shape can be formed at once on an exterior material by using a plate having a plurality of holes and a punch assembly having a plurality of punches to penetrate through the plurality of holes included in the plate. A tolerance between the forming shape and the patterning shape can be managed with higher precision. Thus, it is possible to improve the quality of a molded article and also possible to remarkably reduce a failure rate. Also, according to the present invention, a forming mold and a patterning mold can be formed at once on the exterior material. Thus, it is possible to impart flexibility to an electrochemical cell. Therefore, it is possible to suppress damage to a composite film used for the exterior material and a degradation in performance of the electrochemical cell.

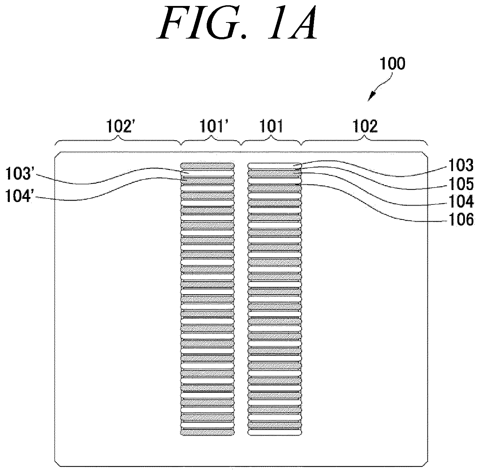

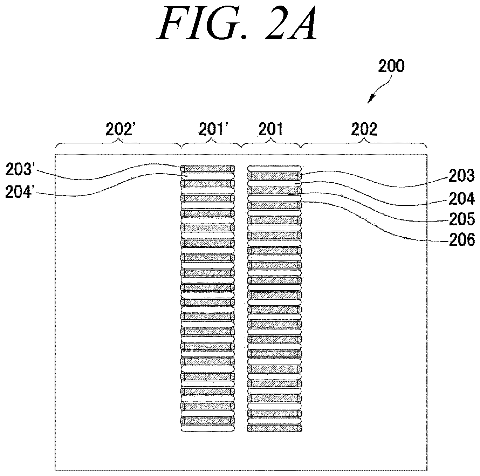

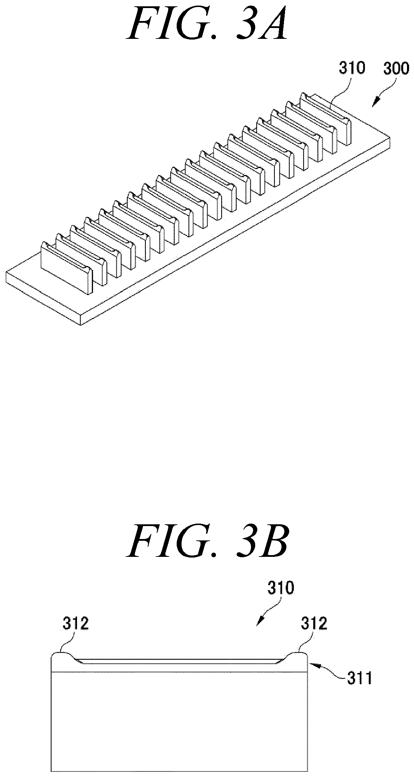

Hereinafter, a lower plate and an upper plate of a pattern forming apparatus will be described with reference to **FIG. 1A** to **FIG. 2E**, and a first type punch and a second type punch of the pattern forming apparatus will be described in detail with reference to **FIG. 3A** to **FIG. 4F****.**

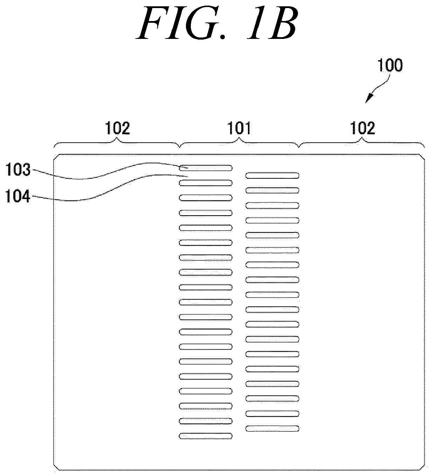

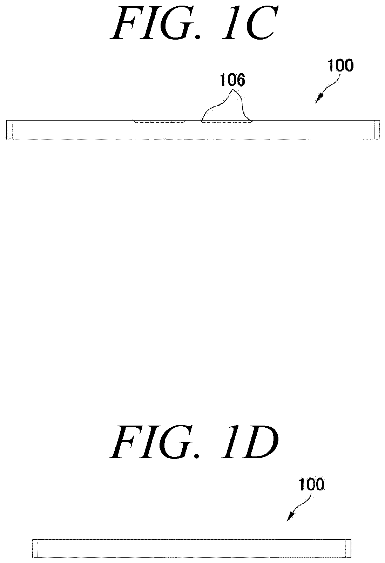

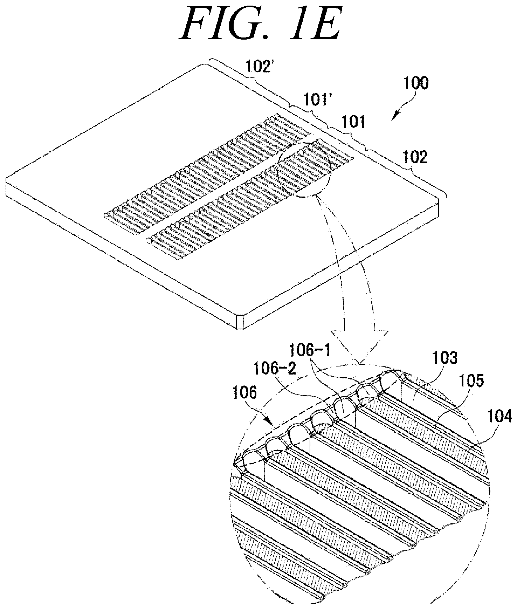

**FIG. 1A** to **FIG. 1E** are diagrams illustrating the lower plate of the pattern forming apparatus according to an embodiment of the present invention. **FIG. 1A** is a plan view of the lower plate, **FIG. 1B** is a bottom view of the lower plate, **FIG. 1C** is a front view of the lower plate, **FIG. 1D** is a rear view of the lower plate, and **FIG. 1E** is a perspective view of the lower plate.

Referring to **FIG. 1A** to **FIG. 1E****,** a lower plate 100 may include first receiving region formation parts 101 and 101' and first non-receiving region formation parts 102 and 102' which form a concave stepped structure. Herein, the lower plate 100 includes the first receiving region formation parts 101 and 101' and the first non-receiving region formation parts 102 and 102' formed in first and second lines, respectively, so that patterns thereof do not overlap each other. However, all of the first receiving region formation parts 101 and 101' and the first non-receiving region formation parts 102 and 102' formed in the first and second lines, respectively, perform the same function. Therefore, hereinafter, the first receiving region formation part 101 and the first non-receiving region formation part 102 formed in the first line will be described, but a description of the first receiving region formation part 101' and the first non-receiving region formation part 102' formed in the second line will be omitted.

The lower plate 100 may include the first receiving region formation part 101 configured to form a first receiving region in an exterior material in a longitudinal direction of a battery and the first non-receiving region formation part 102 configured to form a first non-receiving region enclosing the first receiving region. Herein, the first receiving region formation part 101 may be located at a central portion of the lower plate 100, and the first non-receiving region formation part 102 may be located at a peripheral portion of the lower plate 100.

The lower plate 100 may be formed in a stepped structure in which the first receiving region formation part 101 has a different height from the first non-receiving region formation part 102. For example, the height of the first receiving region formation part 101 may be smaller than that of the first non-receiving region formation part 102. Herein, a boundary surface 106 corresponding to the stepped structure may be between the first receiving region formation part 101 and the first non-receiving region formation part 102, and the first receiving region formation part 101 and the first non-receiving region formation part 102 formed in the stepped structure by the boundary surface 106 may be connected to each other.

The first receiving region formation part 101 may form the first receiving region in the exterior material by pressurizing a second receiving region formation part 201 of an upper plate 200 to be described later. The first non-receiving region formation part 102 may form the first non-receiving region in the exterior material by pressurizing a second non-receiving region formation part 202 of the upper plate 200 to be described later. Herein, the first receiving region may be a region into which an electrode assembly is to be inserted when the battery is manufactured, and the first non-receiving region may be a region into which the electrode assembly is not to be inserted. In this regard, since the first receiving region formation part 101 has a different height from the first non-receiving region formation part 102 to form a stepped structure, the exterior material may have a concave shape so that the electrode assembly can be inserted into the exterior material through the first receiving region formation part 101. Also, the exterior material may have a planar shape so that the exterior material can be bonded through the first non-receiving region formation part 102 into which the electrode assembly is not to be inserted.

The first receiving region formation part 101 may have a different width from the first non-receiving region formation part 102 by the boundary surface 106. For example, the width of the first receiving region formation part 101 may be smaller than that of the first non-receiving region formation part 102 by the boundary surface 106 located between the first receiving region formation part 101 and the first non-receiving region formation part 102. Herein, since the first receiving region formation part 101 has a different width from the first non-receiving region formation part 102 by the boundary surface 106, processability can be improved during manufacturing an electrochemical cell using the present exterior material.

The first receiving region formation part 101 may be disposed in the longitudinal direction of the battery and may include a plurality of first holes 103 extending in a width direction of the battery. Herein, the first hole 103 may be formed in a penetration structure so that the first type punch included in the punch assembly to be described later can be inserted into the first hole 103 at a position corresponding to the lower plate 100.

The first receiving region formation part 101 may include a plurality of first middle regions 104 located between two adjacent first holes 103 among the plurality of first holes 103. The plurality of first middle regions 104 may be disposed in the longitudinal direction of the battery and may extend in the width direction of the battery. Herein, the plurality of first middle regions 104 may be formed in a non-penetration structure. Unlike a plurality of second middle regions 204 to be described later, the plurality of first middle regions 104 may be concave in the first receiving region formation part 101.

The plurality of first holes 103 and the plurality of first middle regions 104 may be alternately formed at a predetermined spacing distance from each other in the first receiving region formation part 101. Herein, the numbers of the plurality of first holes 103 and the plurality of first middle regions 104 located in the first line may be different from those of a plurality of first holes 103' and a plurality of first middle regions 104' located in the second line. For example, the numbers of the plurality of first holes 103 and the plurality of first middle regions 104 located in the first line may be greater than those of the plurality of first holes 103' and the plurality of first middle regions 104' located in the second line. The first receiving region formation part 101 may include a partition 105 configured to separate the first hole 103 from the plurality of first middle regions 104 located between the plurality of first holes 103. Herein, since the first hole 103 is separated from the first middle region 104 by the partition 105, a pattern can be formed distinctly through the first type punch of the punch assembly to be inserted into the first hole 103 and flexibility can be imparted to the composite film used for the exterior material.

At least one first hole 103 and at least one first middle region 104 located in the first receiving region formation part 101 may be formed into the same pattern shape. For example, at least one first hole 103 and at least one first middle region 104 located in the lower plate 100 may have a rectangular shape with semicircular corners at both ends. Herein, the first hole 103 and the first middle region 104 may be formed into the same pattern shape, and their pattern shape may be identical or different in size.

The boundary surface 106 may be formed to connect stepped structures of the first receiving region formation part 101 and the first non-receiving region formation part 102. Herein, the boundary surface 106 may include a region in contact with the first hole 103 and the first middle region 104 of the first receiving region formation part 101. For example, in the entire area of the boundary surface 106, a region 106-1 in contact with an end of the first hole 103 or an end of the first middle region 104 may be different in shape from a region 106-2 connected to the partition 105.

To this end, the boundary surface 106 may be formed to connect the first receiving region formation part 101 and the first non-receiving region formation part 102 and then, a region (*e.g.*, a rectangular shape with semicircular corners at both ends) corresponding to the first hole 103 and the first middle region 104 is brought into contact with a region of the boundary surface 106 through a shearing process. Thus, the region of the boundary surface 106 may be formed into a semicircular shape.

Therefore, in the boundary surface 106, the region 106-1 in contact with the end of the first hole 103 or the end of the first middle region 104 may be formed into a semicircular shape according to the shape of the end of the first hole 103 or the end of the first middle region 104, and the region 106-2 connected to the partition 105 may be formed into a planar shape so that the first receiving region formation part 101 and the first non-receiving region formation part 102 are connected by the partition 105.

The boundary surface 106 is formed along the first hole 103, the first middle region 104, and the partition 105 as described above. When a first pattern is formed on the exterior material by pressurizing the lower plate 100 and the upper plate 200, both ends of the exterior material formed by the region 106-1 of the boundary surface 106 in contact with the first hole 103 and the first middle region 104 may have a distinct semicircular shape, and a region between two adjacent semicircular shapes formed by the region 106-2 of the boundary surface 106 connected to the partition 105 may facilitate bending and straightening of the exterior material. Thus, flexibility may be imparted to the electrochemical cell in order to suppress damage to the exterior material.

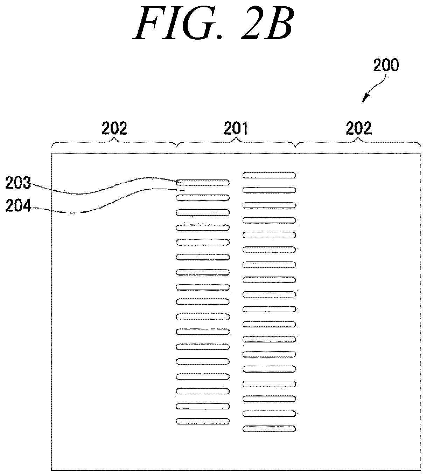

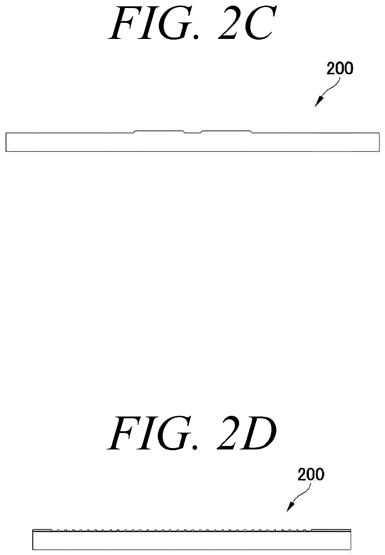

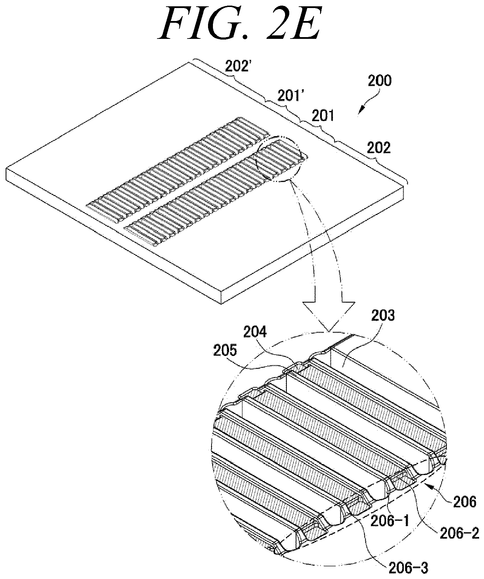

**FIG. 2A** to **FIG. 2E** are diagrams illustrating the upper plate of the pattern forming apparatus according to an embodiment of the present invention. Herein, **FIG. 2A** to **FIG. 2E** illustrate the upper plate of the pattern forming apparatus rotated 180 degrees to facilitate explanation of the upper plate. **FIG. 2A** is a plan view of the upper plate, **FIG. 2B** is a bottom view of the upper plate, **FIG. 2C** is a front view of the upper plate, **FIG. 2D** is a bottom view of the upper plate, and **FIG. 2E** is a perspective view of the upper plate.

Referring to **FIG. 2A** to **FIG. 2E****,** the upper plate 200 may be formed corresponding to the lower plate 100, and may include second receiving region formation parts 101 and 101' and second non-receiving region formation parts 202 and 202' which form a convex stepped structure. Herein, the upper plate 200 includes the second receiving region formation parts 201 and 201' and the second non-receiving region formation parts 202 and 202' formed in first and second lines, respectively, so that patterns thereof do not overlap each other. However, all of the second receiving region formation parts 201 and 201' and the second non-receiving region formation parts 202 and 202' formed in the first and second lines, respectively, perform the same function. Therefore, hereinafter, the second receiving region formation part 201 and the second non-receiving region formation part 202 formed in the first line will be described, but a description of the second receiving region formation part 201' and the second non-receiving region formation part 202' formed in the second line will be omitted.

The upper plate 200 may include the second receiving region formation part 201 configured to form a second receiving region in the exterior material in the longitudinal direction of the battery and the second non-receiving region formation part 202 configured to form a second non-receiving region enclosing the second receiving region. Herein, the second receiving region formation part 201 may be located at a central portion of the upper plate 200, and the second non-receiving region formation part 202 may be located at a peripheral portion of the upper plate 200.

The upper plate 200 may is formed in a stepped structure in which the second receiving region formation part 201 has a different height from the second non-receiving region formation part 202. For example, the height of the second receiving region formation part 201 may be greater than that of the second non-receiving region formation part 202. Herein, a boundary surface 206 corresponding to the stepped structure may be between the second receiving region formation part 201 and the second non-receiving region formation part 202, and the second receiving region formation part 201 and the second non-receiving region formation part 202 formed in the stepped structure by the boundary surface 206 may be connected to each other.

The second receiving region formation part 201 may form the second receiving region in the exterior material by pressurizing the first receiving region formation part 101 of the lower plate 100 described above. The second non-receiving region formation part 202 may form the second non-receiving region in the exterior material by pressurizing the first non-receiving region formation part 102 of the lower plate 100 described above. Herein, the second receiving region may be a region into which the electrode assembly is to be inserted when the battery is manufactured, and the second non-receiving region may be a region into which the electrode assembly is not to be inserted. In this regard, since the second receiving region formation part 201 has a different height from the second non-receiving region formation part 202 to form a stepped structure, the exterior material may have a convex shape so that the electrode assembly can be inserted into the exterior material through the second receiving region formation part 201. Also, the exterior material may have a planar shape so that the exterior material can be bonded through the second non-receiving region formation part 202 into which the electrode assembly is not to be inserted.

The second receiving region formation part 201 may have a different width from the second non-receiving region formation part 202 by the boundary surface 206. For example, the width of the second receiving region formation part 201 may be smaller than that of the second non-receiving region formation part 202 by the boundary surface 206 located between the second receiving region formation part 201 and the second non-receiving region formation part 202. Herein, since the second receiving region formation part 201 has a different width from the second non-receiving region formation part 202 by the boundary surface 206, processability can be improved during the manufacturing of the electrochemical cell using the present exterior material.

The second receiving region formation part 201 may be disposed in the longitudinal direction of the battery and may include a plurality of second holes 203 extending in the width direction of the battery. Herein, the second hole 203 may be formed in a penetration structure so that the second type punch included in the punch assembly to be described later can be inserted into the second hole 203 at a position corresponding to the upper plate 200.

The second receiving region formation part 201 may include the plurality of second middle regions 204 located between two adjacent second holes 203 among the plurality of second holes 203. The plurality of second middle regions 204 may be disposed in the longitudinal direction of the battery and may extend in the width direction of the battery. Herein, the plurality of second middle regions 204 may be formed in have a non-penetration structure. Unlike the plurality of first middle regions 104 described above, the plurality of second middle regions 204 may be convex in the second receiving region formation part 201.

The plurality of second holes 203 and the plurality of second middle regions 204 may be alternately formed at a predetermined spacing distance from each other in the second receiving region formation part 201. Herein, the numbers of the plurality of second holes 203 and the plurality of second middle regions 204 located in the first line may be different from those of a plurality of second holes 203 and a plurality of second middle regions 204 located in the second line. For example, the numbers of the plurality of second holes 203 and the plurality of second middle regions 204 located in the first line may be greater than those of the plurality of second holes 203' and the plurality of second middle regions 204' located in the second line.

The second receiving region formation part 201 may include a partition 205 configured to separate the second hole 203 from the plurality of second middle regions 204 located between the plurality of second holes 203. Herein, since the first hole 203 is separated from the first middle region 204 by the partition 205, a pattern can be formed distinctly through the second type punch of the punch assembly to be inserted into the second hole 203 and flexibility and durability can be imparted to the exterior material.

At least one second hole 203 and at least one second middle region 204 located in the second receiving region formation part 201 may be formed into different pattern shapes. Herein, in the at least one second middle region 204, both peripheral portions of the second middle region 204 may be different in height from an inner portion of the second middle region 204. For example, at least one second hole 203 located in the upper plate 200 may have a rectangular shape with semicircular corners at both ends, and at least one second middle region 204 may have a rectangular shape. Herein, the second hole 203 and the second middle region 204 may have pattern shapes different in size in the width direction. For example, the pattern shape of the second hole 203 may be greater in size than the pattern shape of the second middle region 204.

The boundary surface 206 may be formed to connect stepped structures of the second receiving region formation part 201 and the second non-receiving region formation part 202. Herein, the boundary surface 206 may include a region in contact with the second hole 203 and the second middle region 204 of the second receiving region formation part 201. For example, in the entire area of the boundary surface 206, regions 206-1 and 206-2 in contact with an end of the second hole 203 or an end of the second middle region 204 may be different in shape from a region 206-3 connected to the partition 205.

To this end, the boundary surface 206 may be formed to connect the second receiving region formation part 201 and the second non-receiving region formation part 202 and then, a region corresponding to the second hole 203 is brought into contact with a region of the boundary surface 206 through a shearing process. Thus, the region 206-1 of the boundary surface 206 may be formed into a semicircular shape.

Also, the second middle region 204 located between at least one partition 205 has a smaller height than the at least one partition 205 and both ends of the second middle region 204 have a concave shape. Therefore, the region 206-2 of the boundary surface 206 in contact with an end of the second middle region 204 may be more retracted than a surface corresponding to the partition 205 and formed into a rounded rectangular shape along the shape of the end of the second middle region 204.

Further, the region 206-3 of the boundary surface 206 may be formed into a trapezoidal shape connected to the partition 205 between the region 206-1 and the region 206-2.

Therefore, in the boundary surface 206, the region 206-1 in contact with the second hole 203 may be formed into a semicircular shape, and the region 206-2 in contact with the second middle region 204 may be more retracted by a predetermined distance than the partition 205 and formed into a rounded rectangular shape. Also, the region 206-3 connected to the partition 205 may be formed to connect the partition 205 of the second receiving region formation part 201 to the second non-receiving region formation part 202.

The boundary surface 206 is formed along the second hole 203, the second middle region 204, and the partition 205 as described above. When a first pattern is formed on the exterior material by pressurizing the lower plate 100 and the upper plate 200, both ends of the exterior material formed by the region 206-1 of the boundary surface 206 in contact with the second hole 203 may have a distinct semicircular shape, and the region 206-2 of the boundary surface 206 in contact with the second middle region 204 may facilitate a coupling between the first middle region 104 and the second middle region 204. Also, a region formed by the region 206-3 of the boundary surface 206 connected to the partition 205 may facilitate bending and straightening of the exterior material. Thus, flexibility may be imparted to the electrochemical cell in order to suppress damage to the exterior material.

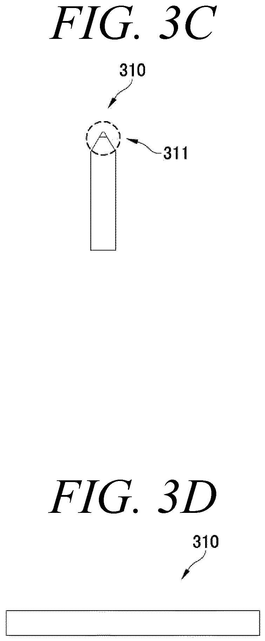

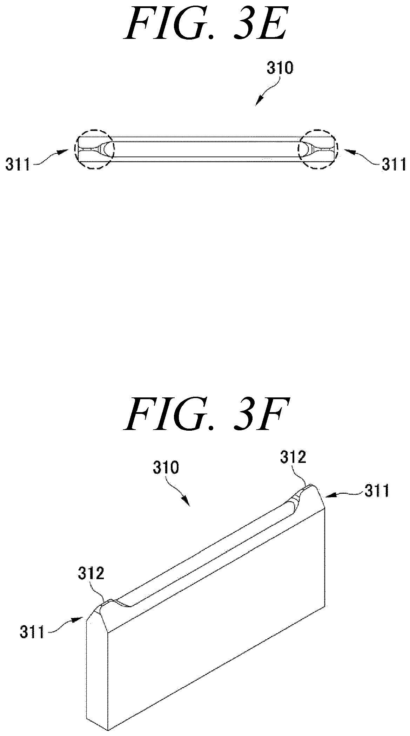

**FIG. 3A** to **FIG. 3F** are diagrams illustrating the first type punch included in the punch assembly corresponding in position to the lower plate according to an embodiment of the present invention. **FIG. 3A** is a perspective view of a lower punch assembly 300 including a plurality of first type punches 310, **FIG. 3B** is a front view of the first type punch 310, **FIG. 3C** is a side view of the first type punch 310, **FIG. 3D** is a bottom view of the first type punch 310, **FIG. 3E** is a plan view of the first type punch 310, and **FIG. 3F** is a perspective view of the first type punch 310.

Referring to **FIG. 1A** to **FIG. 1E** and **FIG. 3A** to **FIG. 3F****,** the lower punch assembly 300 corresponding in position to the lower plate 100 may be disposed in the longitudinal direction of the battery and may include the plurality of first type punches 310 extending in the width direction of the battery. Herein, the plurality of first type punches 310 may be alternately formed at a predetermined spacing distance from each other in the lower punch assembly 300.

The number of the plurality of first type punches 310 of the lower punch assembly 300 may vary depending on whether or not the plurality of first type punches 310 is inserted into the holes included in the first line or the second line of the lower plate 100. For example, in the lower punch assembly 300, the number of the plurality of first type punches 310 to be inserted into the plurality of first holes 103 included in the first line of the lower plate 100 may be greater than that of the plurality of first type punches 310 to be inserted into the plurality of first holes 103' included in the second line.

The plurality of first type punches 310 may be formed corresponding in pattern shape to the first holes 103 so as to be inserted into the plurality of first holes 103 included in the lower plate 100. For example, an end region 311 of the first type punch 310 in contact with the exterior material may be tapered in a thickness direction. Herein, the first type punch 310 may include protrusions 312 formed at both ends of the end region 311.

When the plurality of first type punches 310 included in the lower punch assembly 300 is inserted into the plurality of first holes 103 of the lower plate 100, a concave pattern may be formed on the exterior material.

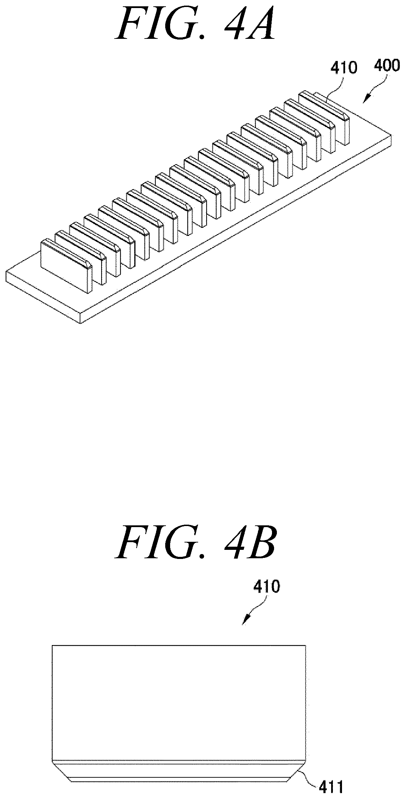

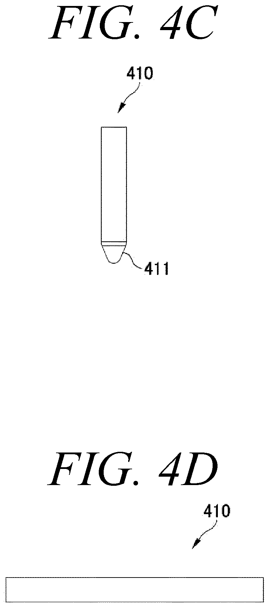

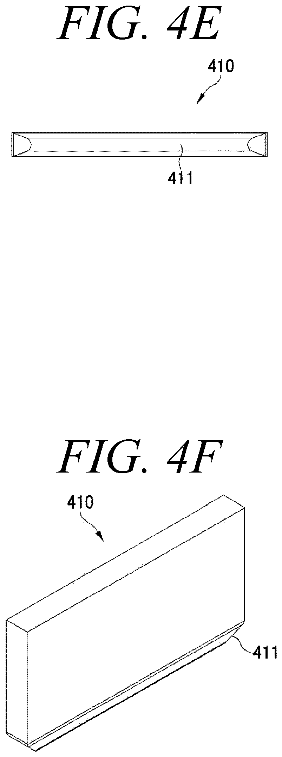

**FIG. 4A** to **FIG. 4F** are diagrams illustrating the second type punch included in the punch assembly according to an embodiment of the present invention. Herein, **FIG. 4A** to **FIG. 4F** illustrate the upper punch assembly 400 rotated 180 degrees to facilitate explanation of the upper punch assembly 400 composed of the plurality of second type punches 410. **FIG. 4A** is a perspective view of an upper punch assembly 400 including a plurality of second type punches 410, **FIG. 4B** is a front view of the second type punch 410, **FIG. 4C** is a side view of the second type punch 410, **FIG. 4D** is a bottom view of the second type punch 410, **FIG. 4E** is a plan view of the second type punch 410, and **FIG. 4F** is a perspective view of the second type punch 410.

Referring to **FIG. 2A** to **FIG. 2E** and **FIG. 4A** to **FIG. 4F****,** the upper punch assembly 400 corresponding in position to the upper plate 200 may be disposed in the longitudinal direction of the battery and may include the plurality of second type punches 410 extending in the width direction of the battery. Herein, the plurality of second type punches 410 may be alternately formed at a predetermined spacing distance from each other in the upper punch assembly 400.

The number of the plurality of second type punches 210 of the upper punch assembly 400 may vary depending on whether or not the plurality of second type punches 210 is inserted into the holes included in the first line or the second line of the upper plate 200. For example, in the upper punch assembly 400, the number of the plurality of second type punches 410 to be inserted into the plurality of second holes 203 included in the first line of the upper plate 200 may be greater than that of the plurality of second type punches 410 to be inserted into the plurality of second holes 203' included in the second line.

The plurality of second type punches 410 may be formed corresponding in pattern shape to the second holes 203 so as to be inserted into the plurality of second holes 203 included in the upper plate 200. For example, an end region 411 of the second type punch 410 in contact with the exterior material may be tapered in the thickness direction and the width direction.

When the plurality of second type punches 410 included in the upper punch assembly 400 is inserted into the plurality of second holes 203 of the upper plate 200, a convex pattern may be formed on the exterior material.

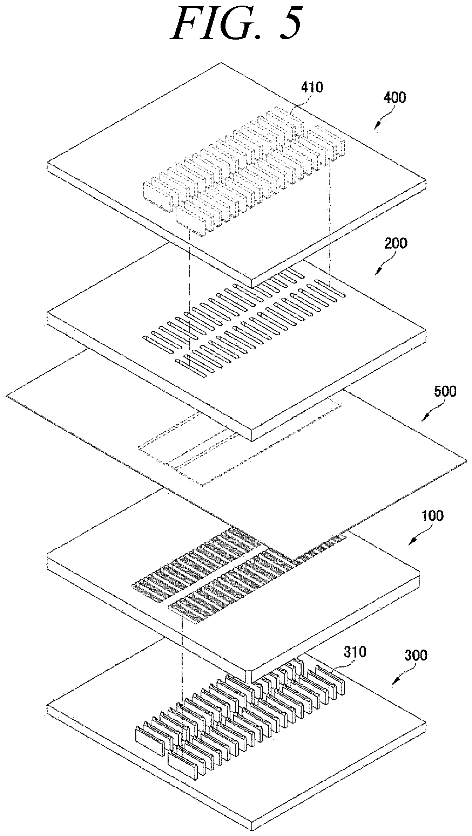

**FIG. 5** is a diagram illustrating the pattern forming apparatus according to an embodiment of the present invention.

Referring to **FIG. 5****,** a pattern forming apparatus 1 may include the lower plate 100, the upper plate 200, the lower punch assembly 300 corresponding to the lower plate 100, and the upper punch assembly 400 corresponding to the upper plate 200.

For example, the lower punch assembly 300 may include at least one first type punch 310 corresponding to at least one first hole 103 inserted into at least one first hole 103 such that the at least one first type punch 310 penetrate through the lower plate 100. Also, the upper punch assembly 400 may include at least one second type punch 410 corresponding to at least one second hole 203 inserted into at least one second hole 203 such that the at least one second hole 203 penetrate through the upper plate 200.

An exterior material 500 may be located between the lower plate 100 and the upper plate 200. A first pattern may be formed on the exterior material 500 by pressurizing the lower plate 100 and the upper plate 200, and a second pattern may be formed on the exterior material 500 through the lower punch assembly 300 and the upper punch assembly 400.

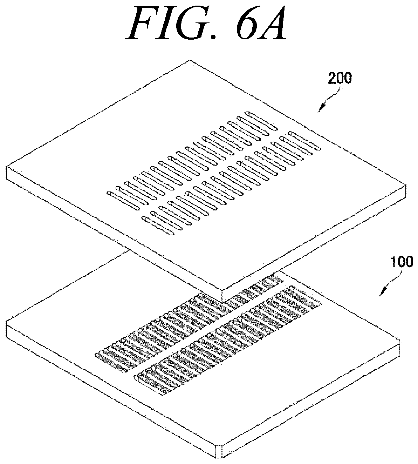

Hereinafter, forming a pattern on an exterior material by the pattern forming apparatus 1 composed of the lower plate 100, the upper plate 200, the lower punch assembly 300, and the upper punch assembly 400 will be described with reference to **FIG. 6A** to **FIG. 6D****.**

**FIG. 6A** to **FIG. 6D** are diagrams provided for explaining the forming a pattern on an exterior material by the pattern forming apparatus according to an embodiment of the present invention.

Referring to **FIG. 6A****,** the lower plate 100 and the upper plate 200 of the pattern forming apparatus 1 include a plurality of holes, and may vertically correspond in position to the exterior material to pressurize the exterior material.

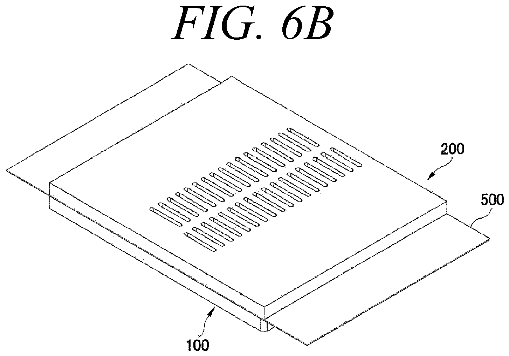

Referring to **FIG. 6B****,** in the pattern forming apparatus 1, the exterior material 500 may be located between the first receiving region formation part 101 included in the lower plate 100 and the second receiving region formation part 201 included in the upper plate 200. Herein, the exterior material 500 is a metal laminate composite film. For example, one side of the composite film is formed of polypropylene resin and the other side may be formed of nylon or polyethylene terephthalate resin. Also, aluminum foil may be interlaid and laminated therebetween.

Then, when the exterior material 500 is located between the lower plate 100 and the upper plate 200 of the pattern forming apparatus 1, the pattern forming apparatus 1 may pressurize the exterior material 500 by means of the lower plate 100 and the upper plate 200, and, thus, a first pattern may be formed on the exterior material 500. The first pattern formed on the exterior material 500 may be a concave pattern formed on a part of a surface of the exterior material 500 to allow an electrode assembly to be accommodated in the exterior material 500.

Then, the pattern forming apparatus 1 may form a second pattern on the exterior material 500 on which the first pattern has been formed, by inserting a plurality of punches into holes located in each of the lower plate 100 and the upper plate 200. Herein, the pattern forming apparatus 1 may form a concave pattern and a convex pattern on the exterior material 500 on which the first pattern has been formed, in the width direction and the thickness direction.

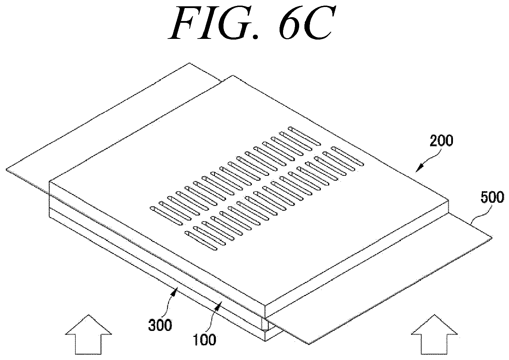

Referring to **FIG. 6C****,** the pattern forming apparatus 1 may insert the first type punch 310, which is included in the lower punch assembly 300 and includes the protrusions 312 at both ends of the end region 311, into at least one first hole 103 located in the lower plate 100 in a state where the exterior material 500 is pressurized by the lower plate 100 and the upper plate 200. For example, the pattern forming apparatus 1 may move the lower punch assembly 300 upwards so as to be brought into contact with the lower plate 100, and, thus, the first type punch 310 included in the lower punch assembly 300 may be inserted into at least one first hole 103 located in the lower plate 100.

By inserting the first type punch 310 into at least one first hole 103 as described above, the pattern forming apparatus 1 may form a concave pattern, which is the second pattern, on the exterior material 500 on which the first pattern has been formed.

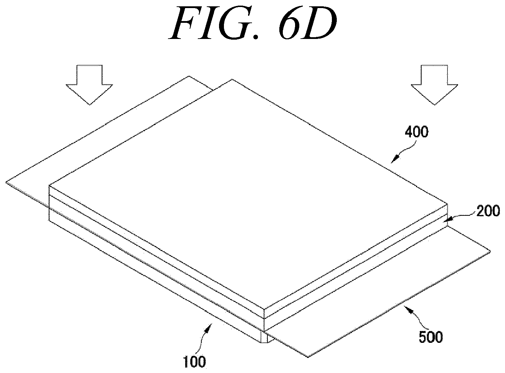

Referring to **FIG. 6D****,** the pattern forming apparatus 1 may insert the second type punch 410, which is included in the upper punch assembly 400 and includes the end region 411 tapered in the width direction, into at least one second hole 203 located in the upper plate 200 in a state where the exterior material 500 is pressurized by the lower plate 100 and the upper plate 200. For example, the pattern forming apparatus 1 may move the upper punch assembly 400 downwards so as to be brought into contact with the upper plate 200, and, thus, the second type punch 410 included in the upper punch assembly 400 may be inserted into at least one second hole 203 located in the upper plate 200.

By inserting the second type punch 410 into at least one second hole 203 as described above, the pattern forming apparatus 1 may form a convex pattern, which is the second pattern, on the exterior material 500 on which the first pattern has been formed. That is, the second pattern may be formed on the first pattern formed on the exterior material 500.

According to the present invention, it is possible to form a first pattern to be concave on the exterior material 500 to accommodate an electrode assembly in the exterior material 500 by pressurizing the exterior material 500 with the lower plate 100 and the upper plate 200 corresponding to a forming mold.

Also, according to the present invention, it is possible to form a second pattern on the exterior material 500 on which the first pattern has been formed by inserting a plurality of punches into holes located in each of the lower plate 100 and the upper plate 200 correspondingto a patterning mold.

According to the prior art, a first pattern is formed only in a width direction of an exterior material. In this case, the durability of an electrochemical cell manufactured using the exterior material is greatly degraded.

Further, according to the prior art, if a first pattern is not formed on the exterior material 500, a second pattern cannot be formed to have a desired shape and depth for distortion resistance of a composite film used for an exterior material. Also, if the first pattern and the second pattern are each independently formed instead of being sequentially formed, the first pattern is damaged. As described above, according to the prior art, an electrochemical cell manufacturing using the exterior material on which the first pattern and the second pattern are each independently formed is likely to be damaged for a short or long period of time.

However, according to the present invention, the first pattern and the second pattern are formed on the exterior material 500 to secure a space for accommodating the electrode assembly in the exterior material 500 and impart durability to the composite film used for the exterior material 500 in an environment where the electrochemical cell can be distorted. Also, according to the prior art, a pattern is formed only in a longitudinal direction of the exterior material, whereas according to the present invention, a plurality of first patterns and second patterns is repeatedly formed in an accommodation region of the exterior material 500 so that the patterns are formed in the thickness direction and the width direction as well as the longitudinal direction of the exterior material 500. Therefore, according to the present invention, the durability of the exterior material can be improved.

Also, according to the present invention, the exterior material on which the first pattern is formed and then the second pattern including a concave pattern and a convex pattern is formed in the thickness direction and the width direction of the composite film is applied to an electrochemical cell, and in this case, the electrochemical cell can secure flexibility and durability. Therefore, it is possible to implement the electrochemical cell with high reliability.

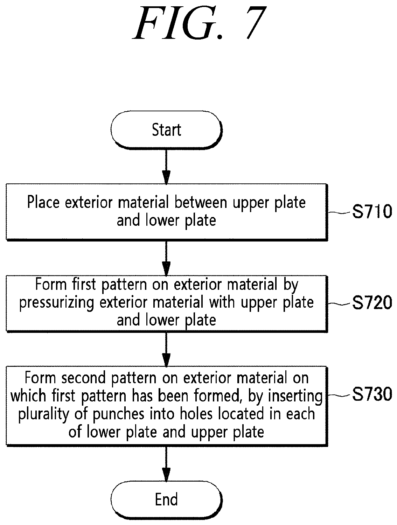

**FIG. 7** is a flowchart showing a method of forming a pattern on an exterior material by a pattern forming apparatus according to an embodiment of the present invention.

In S710, a pattern forming apparatus may place an exterior material between an upper plate and a lower plate.

In S720, the pattern forming apparatus may form a first pattern on the exterior material by pressurizing the exterior material with the upper plate and the lower plate.

In S730, the pattern forming apparatus may form a second pattern on the exterior material on which the first pattern has been formed, by inserting a plurality of punches into holes located in each of the lower plate and the upper plate.

In the descriptions above, the S710 to S730 may be divided into additional processes or combined into fewer processes depending on an embodiment. In addition, some of the processes may be omitted and the sequence of the processes may be changed if necessary.

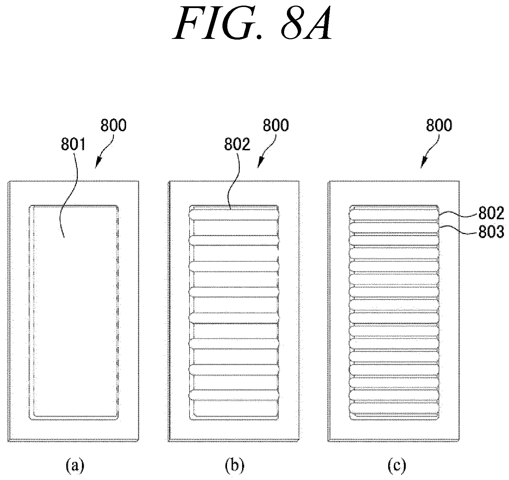

**FIG. 8A** to **FIG. 8C** are diagrams illustrating an exterior material on which a first pattern and a second pattern are formed, and a battery manufactured by using the exterior material according to an embodiment of the present invention.

**FIG. 8A-A** illustrates an exterior material 800 on which a first pattern 801 having a concave shape for accommodating an electrode assembly is formed by the pattern forming apparatus 1, and **FIG. 8A-B** illustrates that the first type punch 310 included in the lower punch assembly 300 is inserted into at least one first hole 103 of the lower plate 100 by the pattern forming apparatus 1 to form a concave pattern 802 of a second pattern on the first pattern 801 of the exterior material 800. Also, **FIG. 8A-C** illustrates that the second type punch 410 included in the upper punch assembly 400 is inserted into at least one second hole 203 of the upper plate 200 by the pattern forming apparatus 1 to form a convex pattern 803 as well as the concave pattern 802 of the second pattern 802 on the first pattern 801 of the exterior material 800.

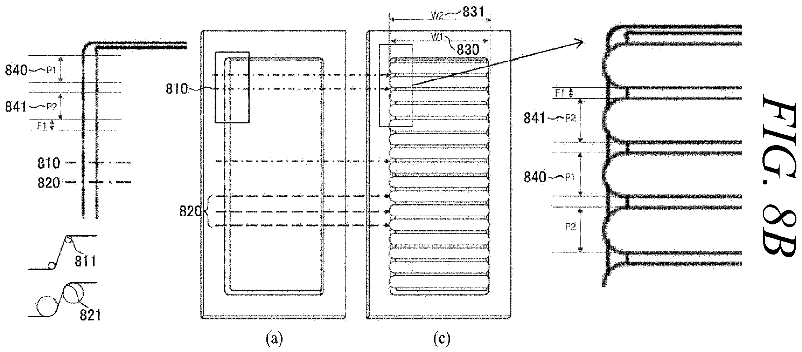

Referring to FIG. 8B**,** a width 831 of the second pattern formed on the exterior material 800 may be equal to or greater than a width 830 of the first pattern formed on the exterior material 800 as shown in **FIG. 8A-A** and **FIG. 8A-C.** If the width 831 of the second pattern is smaller than the width 830 of the first pattern, the electrochemical cell may be distorted, and, thus, the durability of the exterior material 800 may be greatly degraded. Therefore, the width 831 of the second pattern is designed to be greater than the width 830 of the first pattern.

Further, a region between the convex pattern and the concave pattern corresponding to the second pattern formed on the exterior material 800 has a smaller radius of curvature than one of the convex pattern and the concave pattern formed on the exterior material 800. A receiving region for accommodating the electrode assembly is formed in the exterior material 800 by the lower plate 100 and the upper plate 200 including a plurality of holes, and, thus, a discontinuous processing surface may be formed on the exterior material 800.

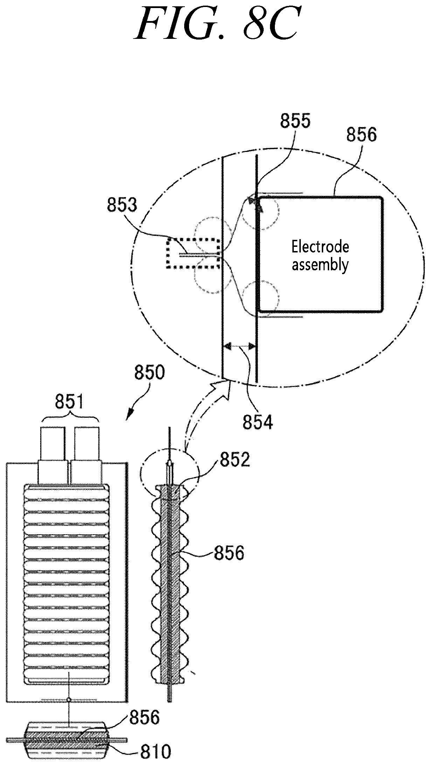

For example, the exterior material 800 requires a space where the first type punch 310 is inserted into the lower plate 100 and a space where the second type punch 410 is inserted into the upper plate 200. Thus, a radius of curvature 821 of a bending portion of a second cutting surface 820 corresponding to one of the convex pattern and the concave pattern of the exterior material 800 may be greater than a radius of curvature 811 of a bending portion of a first cutting surface 810. The radius of curvature 811 of the bending portion of the first cutting surface 810 may be, for example, 3 mm or less. If the radius of curvature 811 of the bending portion of the first cutting surface 810 is greater than, for example, 3 mm, the bending portion of the first cutting surface 810 may not be normally formed, and, thus, the electrode may not be normally accommodated. The radius of curvature of the bending portion will be described below with reference to **FIG. 8C****.**

**A** convex pattern 840 formed on the exterior material 800 has a width equal to or greater than a width of a concave pattern 841 formed on the exterior material 800. Herein, the width of the convex pattern 840 and the width of the concave pattern 841 formed on the exterior material 800 may be, for example, 5 mm or less. If the convex pattern 840 and the concave pattern 841 formed on the exterior material 800 have a width of more than 5 mm, the bending portion of the first cutting surface 810 corresponding to the region between the convex pattern and the concave pattern may not be normally formed, and, thus, the electrode may not be normally accommodated.

If the convex pattern 840 formed on the exterior material 800 has a smaller width than the concave pattern 841, the electrochemical cell may be distorted, and, thus, the durability of the exterior material 800 may be degraded.

Referring to **FIG. 8C****,** in a battery 850, the exterior material 800 on which the first pattern and the second pattern have been formed may be folded, an electrode assembly 856 including a plurality of electrode plates may be inserted into a receiving region 852 of the folded exterior material 800, and a sealing part may seal the exterior material 800 into which the electrode assembly 856 has been inserted by bonding two sealing surfaces of the exterior material 800. Herein, the first pattern may be a concave pattern formed by a forming mold to accommodate the electrode assembly 856, and the second pattern may include a concave pattern and a convex pattern formed by a patterning mold to improve the flexibility and durability of the electrochemical cell.

The battery 850 may further include an electrode lead 851 connected to the electrode assembly 856 and extended to be exposed to the outside.

If the battery 850 has a final thickness of, for example, at most 6 mm and a sealing part 853 is located at the center in a cell thickness direction of the battery 850, when a bending portion 855 has a radius of curvature of more than 3 mm, a receiving region for the electrode assembly 856 is formed to have a small depth and a smaller thickness than the electrode assembly 856. Therefore, it becomes difficult to accommodate the electrode assembly 856. Also, a gap 854 between the electrode assembly 856 and the sealing part 853 is increased, and, thus, a space is wasted. Therefore, an energy density per volume may be reduced.

However, in the battery 850 manufactured according to the present invention, the radius of curvature 821 of the bending portion of the second cutting surface 820 of the exterior material 800 is designed to be greater than the radius of curvature 811 of the bending portion of the first cutting surface 810. Therefore, the above-described problem can be solved.

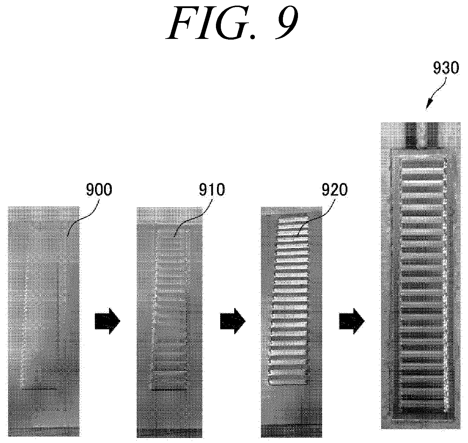

**FIG. 9** illustrates actual views of an exterior material on which a first pattern and a second pattern are formed, and a battery manufactured by using the exterior material according to an embodiment of the present invention.

Referring to **FIG. 9****,** the pattern forming apparatus 1 may form a first pattern having a concave shape for accommodating an electrode assembly on a surface of an exterior material 900.

Then, the pattern forming apparatus 1 may bring the lower plate 100 into contact with the lower punch assembly 300 located corresponding to the lower plate 100 and insert the first type punch 310 into at least one first hole 103 included in the lower plate 100 to form a concave pattern 910 of a second pattern on the exterior material 900. Thereafter, the pattern forming apparatus 1 may bring the upper plate 200 into contact with the upper punch assembly 400 located corresponding to the upper plate 200 and insert the second type punch 410 into at least one second hole 203 included in the upper plate 200 to form a convex pattern 920 of the second pattern on the exterior material 900.

When the electrode assembly is accommodated in the exterior material on which the first pattern and the second pattern have been formed through the above-described process, a battery 930 can be manufactured.

The above description of the present invention is provided for the purpose of illustration, and it would be understood by a person with ordinary skill in the art to which the present invention belongs that various changes and modifications may be made without changing technical conception and essential features of the present invention. Thus, it is clear that the above-described examples are illustrative in all aspects and do not limit the present invention. For example, each component described to be of a single type can be implemented in a distributed manner, likewise, components described to be distributed can be implemented in a combined manner.

The scope of the present invention is defined by the following claims rather than by the detailed description of the embodiment, and it should be understood that all modifications and embodiments conceived from the meaning and scope of the claims and their equivalents are included in the scope of the present invention.

## Claims

1. An apparatus for forming a pattern on an exterior material of a battery, comprising:
a plate that has a plurality of holes and includes a receiving region formation part configured to form a receiving region in an exterior material in a longitudinal direction of the battery and a non-receiving region formation part configured to form a non-receiving region enclosing the receiving region; and
a punch assembly that has a plurality of punches corresponding to the plurality of holes inserted into the plurality of holes such that the plurality of punches penetrate through the plate.

2. The apparatus of Claim 1,
wherein the plate is formed in a stepped structure in which the receiving region formation part has a different height from the non-receiving region formation part.

3. The apparatus of Claim 2,
wherein the receiving region formation part is located at a central portion of the plate, and
wherein the non-receiving region formation part is located at a peripheral portion of the plate.

4. The apparatus of Claim 2,
wherein the plate includes a boundary surface corresponding to the stepped structure between the receiving region formation part and the non-receiving region formation part, and
wherein the receiving region formation part has a different width from the non-receiving region formation part by the boundary surface.

5. The apparatus of Claim 2,
wherein the plate includes:
a lower plate including a first receiving region formation part and a first non-receiving region formation part which form a concave stepped structure; and
an upper plate formed corresponding to the lower plate and including a second receiving region formation part and a second non-receiving region formation part which form a convex stepped structure:

6. The apparatus of Claim 5,
wherein the receiving region formation part includes a plurality of middle regions located between the plurality of holes and a partition configured to separate the plurality of holes from the plurality of middle regions.

7. The apparatus of Claim 6,
wherein the plurality of holes are formed in a penetration structure to allow the plurality of punches to be inserted into the plurality of holes, and
wherein the plurality of first middle regions are formed in a non-penetration structure.

8. The apparatus of Claim 6,
wherein at least one first hole and at least one first middle region, which are located in the lower plate, are formed as a same pattern shape, and
wherein at least one second hole and at least one second middle region, which are located in the upper plate, are formed as a different pattern shapes.

9. The apparatus of Claim 8,
wherein in the at least one second middle region, both peripheral portions of the second middle region are different in height from an inner portion of the second middle region.

10. The apparatus of Claim 1,
wherein the plurality of punches is formed corresponding in a pattern shape to the plurality of holes to allow the plurality of punches to be inserted into the plurality of holes, and
an end region of each of the plurality of punches in contact with the exterior material is tapered in a thickness direction.

11. The apparatus of Claim 10,
wherein the plurality of punches includes:
a first type punch including protrusions at both ends of the end region; and
a second type punch including the end region tapered in a width direction.

12. A method for forming a pattern on an exterior material by an apparatus for forming a pattern, including a plate that has a plurality of holes and includes a receiving region formation part configured to form a receiving region in the exterior material in a longitudinal direction of the battery and a non-receiving region formation part configured to form a non-receiving region enclosing the receiving region and a punch assembly that has a plurality of punches corresponding to the plurality of holes inserted into the plurality of holes such that the plurality of punches penetrate through the plate, the method comprising:
placing the exterior material between an upper plate and a lower plate of the plate;
forming the first pattern on the exterior material by pressurizing the exterior material with the upper plate and the lower plate; and
forming the second pattern on the exterior material on which the first pattern has been formed by inserting the plurality of punches into the holes located in each of the lower plate and the upper plate.

13. The method of Claim 12,
wherein the placing the exterior material between an upper plate and a lower plate includes:
placing the exterior material between a first receiving region formation part included in the lower plate and a second receiving region formation part included in the upper plate.

14. The method of Claim 12,
wherein the forming the second pattern includes:
forming a concave pattern and a convex pattern on the exterior material on which the first pattern has been formed, in a width direction and a thickness direction.

15. The method of Claim 14,
wherein the forming the second pattern includes:
forming the concave pattern on the exterior material on which the first pattern has been formed, by inserting a first type punch including protrusions at both ends of an end region among the plurality of punches into at least one first hole located in the lower plate; and
forming the convex pattern on the exterior material on which the first pattern has been formed, by inserting a second type punch including the end region tapered in the width direction among the plurality of punches into at least one second hole located in the upper plate.

16. The method of Claim 15,
wherein the convex pattern formed on the exterior material has a width equal to or greater than a width of the concave pattern formed on the exterior material.

17. The method of Claim 12,
wherein the second pattern formed on the exterior material has a width equal to or greater than a width of the first pattern formed on the exterior material.

18. The method of Claim 14,,
wherein a region between the convex pattern and the concave pattern formed on the exterior material has a smaller radius of curvature than one of the convex pattern and the concave pattern formed on the exterior material.
